# EUROPEAN PATENT APPLICATION

(11) **EP 4 183 510 A1**
(43) Date of publication of application: **24.05.2023**
(21) Application number: 21843432.2
(22) Date of filing: 26.05.2021
(51) Int. Cl.: B23K 11/11, B23K 31/00

(54) **RESISTANCE SPOT WELDING METHOD AND METHOD FOR MANUFACTURING WELDED JOINT**

(30) Priority: 14.07.2020 JP 2020120974
(71) Applicant: JFE Steel Corporation, Tokyo 100-0011 (JP)
(72) Inventor: MAEDA, Satoshi, Tokyo 100-0011 (JP); ENDOH, Kazuki, Tokyo 100-0011 (JP); TOJI, Yuki, Tokyo 100-0011 (JP); KAWABE, Nao, Tokyo 100-0011 (JP)
(74) Representative: Hoffmann Eitle
(86) International application number: PCT/JP2021/019986
(87) International publication number: WO 2022/014173

(57) **Abstract**

Provided is a resistance spot welding method suitable for manufacturing a weld joint exhibiting excellent delayed fracture resistance. The resistance spot welding method includes sandwiching two or more overlapped steel sheets between a pair of welding electrodes, applying current to the steel sheets while pressing the steel sheets, forming a nugget on overlapping surfaces of the steel sheets to join the steel sheets, and after the joining, directly or indirectly irradiating the nugget with sound waves having a frequency of 10 Hz or more and 100000 Hz or less so that a sound pressure level on a surface of the steel sheet is 30 dB or more.

## Description

### TECHNICAL FIELD

This disclosure relates to a resistance spot welding method suitable for manufacturing a weld joint that exhibits excellent delayed fracture resistance, and a method of manufacturing a weld joint using the resistance spot welding method. This disclosure is particularly suitable for resistance spot welding of high strength steel sheets. Further, this disclosure is particularly suitable for use in the manufacturing process of automotive parts for automobiles and the like and in the assembly process of automotive bodies.

### BACKGROUND

Resistance spot welding is widely used for the processing of the appearance of vehicles such as automobiles because the appearance is good after the welding. Resistance spot welding is one of the techniques to join metals by applying pressure to the metals. Specifically, resistance spot welding is a technique of joining metals by applying electrodes from both sides of two or more metals (e.g., steel sheets) to be joined, gradually melting the metals by current while applying moderate pressure, and then cooling the metals to solidify the melted portion. A heat-affected zone (HAZ), which is formed at and around a portion where metals are joined and which is melted by joining, is called a nugget. Further, a portion joined via a nugget is called a weld joint.

In resistance spot welding, a high tensile stress remains in the nugget portion during the melting and solidifying process of the metal. In addition, during the melting and solidifying process in the welding, antirust oil, moisture, coating, surface treatment agent, and the like present on the surface of the steel sheet are incorporated into the metal, causing formation or penetration of hydrogen. The hydrogen tends to accumulate in areas of tensile stress, resulting in the problem of occurrence of delayed fracture in the weld joint after the welding and cooling of the metal, due to residual stress and hydrogen in the nugget.

Delayed fracture is a phenomenon in which the metal suddenly fractures after a period of time has elapsed since the welding or other processing, even though the stress applied to the metal is below its yield stress.

On the other hand, high strength steel sheets are sometimes used as steel sheets for automobiles and other vehicles to improve the crashworthiness by strengthening the automotive body. In general, a high strength steel sheet is a steel sheet to which not only a large amount of C but also various alloying elements are added to increase the strength, but it has susceptibility to hydrogen embrittlement. Therefore, the delayed fracture described above is a particularly serious problem in resistance spot welding of high strength steel sheets.

In response to this delayed fracture problem, JP 6194765 B (PTL 1) proposes a technique of applying welding current at a certain electrode force, then applying subsequent-current at an electrode force higher than the certain electrode force, and further holding the electrodes, to reduce tensile residual stress in a welded portion and improve delayed fracture resistance. In addition, PTL 1 describes that, after holding the electrodes, further performing "heat treatment after welding" at 120 °C to 220 °C for 100 seconds to 6000 seconds reduces the amount of hydrogen that has penetrated into the welded portion, which is advantageous in preventing delayed fracture.

### CITATION LIST

### Patent Literature

PTL 1: JP 6194765 B

### SUMMARY

### (Technical Problem)

However, the technique of PTL 1 focuses solely on reducing tensile residual stress by optimizing the electrode force and current pattern to prevent delayed fracture, and there is room for further improvement in hydrogen embrittlement of a steel sheet. With regard to the hydrogen embrittlement, the technique of PTL 1 has a problem that, because the welded portion cools rapidly during the non-current cooling time provided between the welding current and the subsequent-current, a large amount of hydrogen remains without diffusing to the outside of the nugget, which increases the amount of residual hydrogen inside the nugget. As a result, there is a concern that it is difficult to suppress delayed fracture caused by the residual hydrogen. Even if the "heat treatment after welding" described in PTL 1 is performed for the residual hydrogen, there are further concerns that the costs are inevitably increased due to the heat treatment equipment, and that the material properties are changed due to changes in the microstructure of the steel sheet caused by the heat treatment.

Therefore, it is necessary to develop a technique that can better control the hydrogen remaining in a nugget during resistance spot welding, to obtain a weld joint that exhibits better delayed fracture resistance.

To solve the above problems, it could be helpful to provide a resistance spot welding method and a method of manufacturing a weld joint, with which a weld joint that exhibits excellent delayed fracture resistance can be obtained by improving hydrogen embrittlement properties.

### (Solution to Problem)

To solve the above problems, we have diligently studied methods to improve the delayed fracture resistance of an obtained weld joint by releasing hydrogen that has been formed in a nugget or that has penetrated into a nugget during resistance spot welding to the outside of a steel sheet. As a result, we newly found that irradiating joined steel sheets with sound waves is effective in improving the delayed fracture resistance of a weld joint without changes in material properties due to microstructural changes caused by heat treatment.

We have found that a weld joint that exhibits excellent delayed fracture resistance can be easily obtained by irradiating a steel sheet, on which a nugget has been formed, with sound waves under predetermined conditions in resistance spot welding.

The present disclosure is based on the above findings. We thus provide the following.
1. A resistance spot welding method comprising:
   sandwiching two or more overlapped steel sheets between a pair of welding electrodes,
   applying current to the steel sheets while pressing the steel sheets,
   forming a nugget on overlapping surfaces of the steel sheets to join the steel sheets, and
   after the joining, directly or indirectly irradiating the nugget with sound waves having a frequency of 10 Hz or more and 100000 Hz or less so that a sound pressure level on a surface of the steel sheet is 30 dB or more.

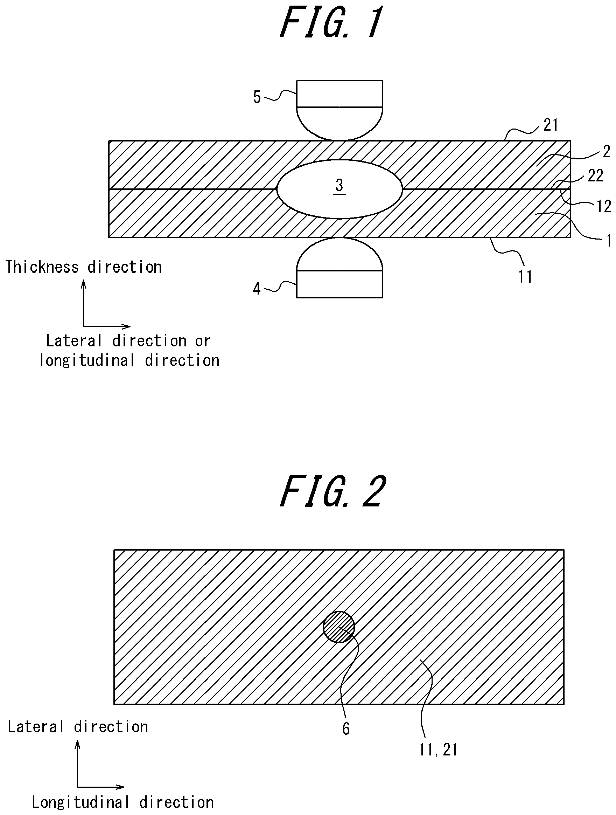

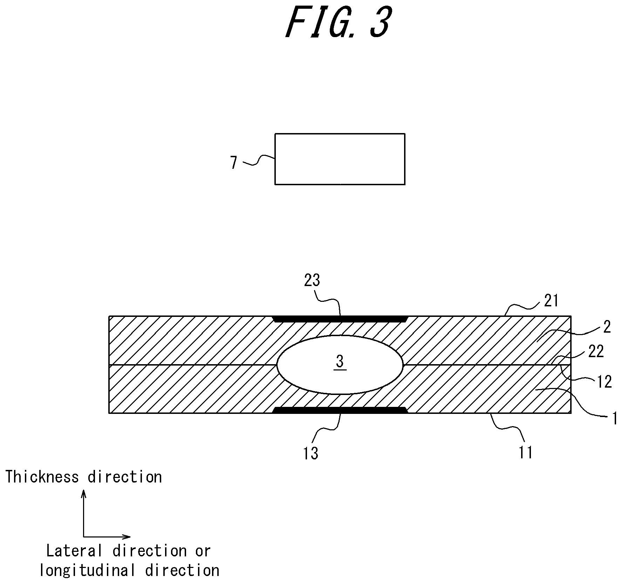

In this specification, the "nugget" is usually formed on the side of the overlapping surfaces of the steel sheets (see reference signs 12 and 22 in FIGS. 1 and 3) and cannot be directly confirmed from the surface of the steel sheet after resistance spot welding (see reference signs 11 and 21 in FIGS. 1 and 3). However, it can be confirmed that a "nugget" has been formed from a welding trace caused on the surface of the steel sheet by the welding. Further, "irradiating the nugget with sound waves" can be performed by, for example, irradiating a portion of the surface of the steel sheet where the welding trace can be confirmed (hereinafter, also referred to as "nugget-equivalent surface", and see reference sign 6 in FIG. 2 and reference signs 13 and 23 in FIG. 3) with sound waves.

In this specification, the "frequency" and the "sound pressure level" can be measured, for example, according to the methods described below.

2. The resistance spot welding method according to 1., wherein time for irradiation of the sound waves is 1 second or longer.

3. The resistance spot welding method according to 1. or 2., wherein at least one of the steel sheets has a tensile strength of 780 MPa or more.

4. The resistance spot welding method according to any one of 1. to 3., wherein at least one of the steel sheets has a coating on at least one of the surface and the overlapping surface.

5. The resistance spot welding method according to 4., wherein the coating is a hot-dip galvanized coating or a galvannealed coating.

6. A method of manufacturing a weld joint, the method comprising:
sandwiching two or more overlapped steel sheets between a pair of welding electrodes,
applying current to the steel sheets while pressing the steel sheets,
forming a nugget on overlapping surfaces of the steel sheets to obtain a weld joint in which the steel sheets are joined, and
after the joining, directly or indirectly irradiating the nugget with sound waves having a frequency of 10 Hz or more and 100000 Hz or less so that a sound pressure level on a surface of the steel sheet is 30 dB or more.

7. The method of manufacturing a weld joint according to 6., wherein time for irradiation of the sound waves is 1 second or longer.

8. The method of manufacturing a weld joint according to 6. or 7., wherein at least one of the steel sheets has a tensile strength of 780 MPa or more.

9. The method of manufacturing a weld joint according to any one of 6. to 8., wherein at least one of the steel sheets has a coating on at least one of the surface and the overlapping surface.

10. The method of manufacturing a weld joint according to 9., wherein the coating is a hot-dip galvanized coating or a galvannealed coating.

### (Advantageous Effect)

According to the resistance spot welding method of the present disclosure, even when steel sheets are joined, the problem of delayed fracture can be satisfactorily avoided without changes in the material properties of the steel sheet due to microstructural changes caused by heat treatment. According to the method of manufacturing a weld joint of the present disclosure, it is possible to easily obtain a weld joint that exhibits excellent delayed fracture resistance.

### BRIEF DESCRIPTION OF THE DRAWINGS

In the accompanying drawings:
FIG. 1 schematically illustrates forming a nugget to join steel sheets according to one embodiment of the present disclosure;
FIG. 2 is a plan view of steel sheets after joining according to one embodiment of the present disclosure from one surface side; and
FIG. 3 schematically illustrates how a nugget-equivalent surface is irradiated with sound waves after steel sheets are joined according to one embodiment of the present disclosure.

### DETAILED DESCRIPTION

The following describes embodiments of the present disclosure with reference to the drawings.

In the resistance spot welding method of the present disclosure, two or more overlapped steel sheets, such as steel sheets 1 and 2, are sandwiched between a pair of welding electrodes 4 and 5, current is applied to the steel sheets while pressing the steel sheets, a nugget 3 is formed on the side of the overlapping surfaces (overlapping portions) 12 and 22 of the steel sheets to join the steel sheets, and then the nugget 3 (for example, at least one of the nugget-equivalent surfaces 13 and 23) is irradiated with sound waves at a predetermined frequency and a predetermined sound pressure level.

According to the resistance spot welding method of the present disclosure, the problem of delayed fracture of the spot-welded portion can be avoided in a good and simple manner, without any change in material properties due to microstructural changes caused by heat treatment, by efficiently releasing hydrogen that accumulates mainly in the nugget to the outside of the steel sheet.

The method of manufacturing a weld joint of the present disclosure also has the same features as the resistance spot welding method of the present disclosure described above. According to the method of manufacturing a weld joint of the present disclosure, a weld joint having excellent delayed fracture resistance can be easily obtained.

Although the reasons why the delayed fracture resistance of the steel sheets can be improved by irradiating the joined steel sheets with sound waves are not clear, we speculate as follows.

By irradiating a nugget formed in joining with sound waves under predetermined conditions, a steel sheet portion including the nugget is forcibly vibrated. Due to bending deformation caused by this forced vibration, the lattice spacing of the steel sheet portion including the nugget repeats expansion (tension) and contraction (compression) in the thickness direction. Hydrogen in the steel where the lattice spacing is expanded is induced to diffuse to the tensile side where the potential energy is lower, so that the expansion and contraction of the lattice spacing promotes the diffusion of hydrogen, and a hydrogen diffusion path connecting the inside and the surface of the steel sheet is forcibly formed. Hydrogen, for which a diffusion path has been intentionally formed, escapes through the surface to the outside of the steel sheet, where it is more energetically advantageous, at the time when the lattice spacing in the vicinity of the steel sheet surface is expanded. Thus, it is speculated that the sound wave irradiation on the joined steel sheets under the predetermined conditions sufficiently and efficiently reduces the hydrogen that accumulates in the steel, especially in the nugget that is the area of tensile residual stress, thereby suppressing delayed fracture of a weld joint in a good and simple manner.

The following describes the resistance spot welding method of the present disclosure in detail according to several embodiments, but the resistance spot welding method of the present disclosure is not limited to these embodiments. Further, the method of manufacturing a weld joint of the present disclosure has the same features as those detailed for the resistance spot welding method of the present disclosure, and the method of manufacturing a weld joint of the present disclosure is not limited to the embodiments described below.

### [Joining steel sheets]

The resistance spot welding method of the present disclosure allows hydrogen to escape efficiently from the nugget after joining the steel sheets. Therefore, the processes up to joining a plurality of steel sheets are not particularly limited and may be performed under general conditions for resistance spot welding. General current conditions for resistance spot welding include, for example, a current of 1 kA to 15 kA, a current time of 100 ms to 2000 ms, and an electrode force of 0.5 kN to 10 kN.

In one embodiment of the present disclosure illustrated in FIGS. 1 and 2, a pair of welding electrodes 4 and 5 are pressed against the surfaces 11 and 21 of two overlapped steel sheets 1 and 2 and current is applied. At this time, the portions of the overlapping surfaces 12 and 22 of the steel sheets on which current is applied are once melt due to resistance heating and then solidified to form a nugget 3. Thus, in the resistance spot welding method, the steel sheets 1 and 2 are joined via the solid nugget 3. This nugget 3 usually does not appear directly on the surfaces 11 and 21 of the joined steel sheets. However, on the surfaces 11 and 21 of the steel sheets, burn traces and/or dent welding traces are formed as resistance spot welding points 6 at the locations where the welding electrodes 4 and 5 are pressed. Therefore, it can be confirmed that the nugget 3 exists inside the thickness direction of the resistance spot welding point 6, and the resistance spot welding point 6 can be treated as a "nugget-equivalent surface" in the process of irradiation of sound waves described below.

### [[Properties of steel sheet]]

The steel sheet used in the resistance spot welding method of the present disclosure is not particularly limited, but it is preferably a high strength steel sheet. Specifically, the tensile strength of at least one of the steel sheets to be joined is preferably 780 MPa or more. The tensile strength is more preferably 1000 MPa or more. The tensile strength is still more preferably 1300 MPa or more. It is further preferably that all of the steel sheets to be joined have the tensile strength described above. When the tensile strength of the steel sheet to be joined is less than 780 MPa, the degree of tensile residual stress caused in the nugget by resistance spot welding is small. In this case, delayed fracture hardly occurs in a resulting weld joint. On the other hand, as the strength of the steel sheet to be joined increases as described above, hydrogen is more likely to be formed in the nugget or to penetrate into the nugget due to resistance spot welding, and delayed fracture is more likely to occur in the weld joint. Therefore, the effect of improving the delayed fracture resistance of the weld joint by irradiation of sound waves is improved. Although the tensile strength of the steel sheet is not particularly limited, it may be 3000 MPa or less.

The chemical composition of the steel sheet is not particularly limited, but it is preferable that the chemical composition be such that the steel sheet can be a high strength steel sheet as described above. Preferred examples of the high strength steel sheet chemical composition include a steel sheet having a C content of 0.05 mass% or more and 0.50 mass% or less.

### [[Surface treatment of steel sheet]]

Because the resistance spot welding method of the present disclosure performs non-contact irradiation of sound waves and is a welding method that is not affected by the surface conditions of the steel sheet, any surface treatment such as coating can be performed for the purpose of imparting desired properties to the steel sheet.

The coating may be formed by any of organic coating, inorganic coating, and metal coating, and the coating may be performed according to known techniques. Above all, from the viewpoint of preventing rust and corrosion, the coating is preferably a hot-dip galvanized (GI) coating or a galvannealed (GA) coating.

### [Irradiation of sound waves]

Next, in the resistance spot welding method of the present disclosure, the nugget (e.g., at least one of the nugget-equivalent surfaces) is intentionally and directly or indirectly irradiated with sound waves after the steel sheets are joined as described above. During the irradiation of sound waves, it is important that the sound waves should have a frequency of 10 Hz or more and 100000 Hz or less and the sound pressure level on the surface of the steel sheet should be 30 dB or more. By controlling the frequency and the sound pressure level as described above, hydrogen can be efficiently released from the nugget, and delayed fracture of the weld joint due to hydrogen embrittlement can be reduced in a good and simple manner without changes in material properties due to microstructural changes caused by heat treatment.

It should be noted that the sound wave irradiation in the present disclosure is performed without contacting the steel sheet.

In this specification, the "frequency" refers to the frequency (Hz) on the sound wave output side set in any sound wave irradiator or the like. Further, the "sound pressure level" refers to the sound pressure level (dB) received by a portion of the surface of the steel sheet irradiated with the sound waves, where specific examples include the nugget-equivalent surface, and it can be measured using an arbitrary sound level meter placed at the location of the portion (nugget-equivalent surface) irradiated with the sound waves.

### [[Frequency]]

It is an important configuration condition in the present disclosure to perform irradiation of sound waves with a frequency of 10 Hz or more and 100000 Hz or less. Even if sound waves with a frequency of less than 10 Hz is applied, the vibration that should be imparted to the steel sheet by the sound wave irradiation is hindered by the rigidity of the steel sheet itself, the diffusion of hydrogen to the outside of the steel sheet is not promoted, and the amount of hydrogen in the nugget is not sufficiently reduced. The frequency of the sound waves to be applied is preferably 100 Hz or higher. It is more preferably 500 Hz or higher. It is still more preferably 3000 Hz or higher. As the frequency of the sound waves to be applied increases, the bending deformation on the steel sheet becomes large. As a result, a better diffusion path for hydrogen is formed in the steel, and delayed fracture caused by hydrogen embrittlement can be further suppressed. Further, as the frequency increases, the directivity of the sound waves increases, rendering it easier to control the position to perform irradiation of sound waves.

On the other hand, if the frequency exceeds 100 kHz, the formed sound waves attenuate significantly in air before reaching the steel sheet surface, the steel sheet, especially the nugget, is not sufficiently irradiated for vibration, and the amount of hydrogen in the steel cannot be efficiently reduced. Therefore, the frequency of the sound waves to be applied should be 100 kHz or less. It is preferably 80 kHz or less. It is more preferably 50 kHz or less.

### [[Sound pressure level]]

It is also an important configuration condition in the present disclosure to perform irradiation of sound waves with a sound pressure level of 30 dB or more. Even if sound waves with a sound pressure level of less than 30 dB are applied, the vibration that should be imparted to the steel sheet by the sound wave irradiation is hindered by the rigidity of the steel sheet itself, the diffusion of hydrogen to the outside of the steel sheet is not promoted, and the amount of hydrogen in the nugget is not sufficiently reduced. The sound pressure level of the sound waves to be applied is preferably 60 dB or more. It is more preferably70 dB or more. As the sound pressure level of the sound waves to be applied increases, the steel sheet is further vibrated, and the residual hydrogen is further released from the steel, especially from the nugget, thereby further suppressing delayed fracture.

On the other hand, due to the performance of commonly available sound wave irradiators, the sound pressure level of the sound waves to be applied is usually 140 dB or less.

The sound pressure level received by the nugget-equivalent surface can be controlled, for example, by changing the output of the sound wave irradiator or by appropriately adjusting the distance between the nugget-equivalent surface and the sound wave irradiator.

### [[Irradiation time]]

If the nugget-equivalent surface is irradiated with sound waves for a short time, it is not enough to desorb the hydrogen remaining in the nugget to the outside of the steel sheet even if the steel sheet is vibrated, and the amount of hydrogen in the steel may not be reduced satisfactorily. Therefore, the time for irradiation of sound waves is preferably 1 second or longer. It is more preferably 5 seconds or longer. It is still more preferably 10 seconds or longer.

On the other hand, exposing the nugget-equivalent surface to sound waves for longer than 3600 seconds reduces the productivity. Therefore, the time for irradiation of sound waves is preferably shorter than 3600 seconds. It is more preferably 1800 seconds or shorter. It is still more preferably 1500 seconds or shorter.

### [[Time from start of current passage to start of sound wave irradiation]]

Delayed fracture due to resistance spot welding using welding electrodes may occur between 180 minutes and 720 minutes, with the start of current passage being 0 seconds. It is preferable to perform irradiation of sound waves before such delayed fracture occurs to suppress or eliminate the accumulation of hydrogen in the nugget, which is areas of tensile stress in the steel sheet. From this point of view, it is preferable to irradiate the nugget-equivalent surface with sound waves within 360 minutes from the start of current passage to the steel sheet. It is more preferably shorter than 180 minutes. It is still more preferably within 60 minutes. From the viewpoint of avoiding the risk of delayed fracture as much as possible, the time from the start of current passage to the start of sound wave irradiation is desirably as short as possible. Therefore, the lower limit of the time from the start of current passage to the start of sound wave irradiation is not particularly limited. However, considering the time required for the current passage itself, the lower limit of the above time is usually 10 seconds.

### [[Amount of residual hydrogen in nugget]]

After the resistance spot welding according to the present disclosure, the amount of residual hydrogen in the nugget is preferably 0.5 ppm or less in mass fraction. It is more preferably 0.3 ppm or less in mass fraction. It may be 0 ppm in mass fraction. Because residual hydrogen in the nugget causes hydrogen embrittlement in a weld joint, the amount of residual hydrogen is desirably as low as possible. In general, resistance spot welding to a steel sheet with high strength is more likely to cause delayed fracture. However, in the present disclosure, sound waves are applied under predetermined conditions, so that the amount of residual hydrogen can be reduced satisfactorily even in the case of high strength steel sheets.

### [Sound wave irradiator]

Irradiation of sound waves can use a common device (a sound wave irradiator or a sound wave generator) that generates sound waves and irradiates an object with the sound waves. Examples of the sound wave irradiator include a sound wave transmitter, and a speaker equipped with a diaphragm or the like in a sound wave transmitter.

The installation method of the sound wave irradiator 7 is not particularly limited as long as the nugget is irradiated with the predetermined sound waves described above. For example, the sound wave irradiator 7 may be installed so that the direction of propagation of the sound waves is such that the sound waves hit at least one of the nugget-equivalent surfaces (reference signs 13 and 23 in FIG. 3) at the shortest linear distance. Alternatively, the sound wave irradiator 7 may be installed so that the sound waves spread and propagate to reach and hit the nugget-equivalent surface even if the direction of propagation of the sound waves is not toward the shortest linear distance described above. When there is a plurality of nugget-equivalent surfaces on one surface of the steel sheet, one sound wave irradiator 7 may be provided for each nugget-equivalent surface 13 or 23, or one or more sound wave irradiators capable of irradiating all the plurality of nugget-equivalent surfaces on one surface with sound waves may be provided. The sound wave irradiator 7 may be provided opposite to both surfaces 11 and 21 of the steel sheet.

Further, when there is a plurality of nugget-equivalent surfaces on one surface, it is acceptable to irradiate only one of the nugget-equivalent surfaces with sound waves, or irradiate any plurality of the nugget-equivalent surfaces with sound waves, or irradiate all the nugget-equivalent surfaces with sound waves, or irradiate the entire surface of the steel sheet. Especially considering that hydrogen tends to remain in the nugget, when there is a plurality of nugget-equivalent surfaces on one surface, it is preferable to irradiate a plurality of nugget-equivalent surfaces with sound waves, and it is more preferable to irradiate all the nugget-equivalent surfaces with sound waves.

From the viewpoint of enhancing the effect of the predetermined frequency on the delayed fracture resistance, the shortest linear distance between the surface of the steel sheet and the sound wave irradiator is preferably within 15 m. It is more preferably within 5 m.

In the present disclosure, residual hydrogen in the nugget can be reduced without heat treatment. Therefore, according to the present disclosure, it is possible to obtain a weld joint that exhibits excellent delayed fracture resistance while avoiding the risk that the chemical composition and/or microstructure of the steel sheet is changed from a desired state due to heat, compared to the conventional technique of performing heat treatment after welding. Further, the present disclosure does not require a heating device for coping with hydrogen embrittlement, which is advantageous in terms of working time and working cost.

Moreover, the present disclosure, which employs a simple method of sound wave irradiation without contacting the steel sheet, can be used particularly advantageously, for example, in resistance spot welding in automobile manufacturing that requires many detailed welding operations.

### EXAMPLES

Two steel sheets of longitudinal direction: 150 mm × lateral direction: 50 mm × sheet thickness: 1.4 mm were used as a lower steel sheet 1 placed vertically downward and an upper steel sheet 2 placed vertically above the lower steel sheet 1. Table 1 lists the tensile strength of the lower steel sheet 1 and the upper steel sheet 2, and the presence or absence of a coating on the surface and the overlapping surface of the steel sheet, which was either without coating (CR) or with coating (hot-dip galvanizing (GI), galvannealing (GA), coating weight was 50 g/m² per side).

The tensile strength was obtained by preparing a JIS No. 5 tensile test piece from each steel sheet along the direction perpendicular to the rolling direction and performing a tensile test in accordance with the provisions of JIS Z 2241 (2011).

As illustrated in FIGS. 1 and 2, a sheet combination of two overlapped steel sheets 1 and 2 was sandwiched between a pair of welding electrodes (lower electrode 4 and upper electrode 5), and a weld joint was obtained by joining the steel sheets under the joining (current) conditions listed in Table 1. A resistance spot welding point 6 schematically represents a welding trace formed on the surface of the steel sheet (weld joint) by the joining.

The process described above was performed with the welding electrodes 4 and 5 always water-cooled and the steel sheet at room temperature (20 °C).

Both of the lower electrode 4 and the upper electrode 5 were chromium-copper DR-type electrodes having a diameter at the tip (tip diameter) of 6 mm and a curvature radius of 40 mm. The electrode force applied during the joining was controlled by driving the lower electrode 4 and the upper electrode 5 with a servomotor, and a single-phase alternating current with a frequency of 50 Hz was supplied.

Thus, resistance spot welding points 6 were observed on the surfaces 11 and 21 of the lower steel sheet 1 and the upper steel sheet 2 after joining, as illustrated in FIG. 2. Further, a nugget 3, which is schematically illustrated in FIG. 1, was formed on the overlapping surfaces 12 and 22 of the lower steel sheet 1 and the upper steel sheet 2 along the thickness direction from the resistance spot welding point 6. Two weld joints were prepared under each set of current conditions to measure the amount of residual hydrogen in the nugget before and after sound wave irradiation, respectively.

After the steel sheets were joined by current as described above and after the "time from start of current passage to start of sound wave irradiation" listed in Table 1 was passed, one of the weld joints obtained under each set of current conditions was irradiated with sound waves from one side of the surface of the steel sheet toward the nugget-equivalent surface (resistance spot welding point 6) under the conditions listed in Table 1. The sound waves were applied using a speaker installed at a position where the shortest linear distance from the nugget-equivalent surface was 0.5 m, the frequency was controlled by the speaker which was the output side, and the sound pressure level was measured using a sound level meter placed near the nugget-equivalent surface on the side irradiated with sound waves.

The obtained weld joint was allowed to stand in the atmosphere at normal temperature (20 °C) for 24 hours, and whether or not delayed fracture occurred after the standing was visually judged. Further, when peeling and cracking of the nugget were not visually observed in the surface, a cross section in the thickness direction including the center of the nugget was observed with an optical microscopy (× 50 times) to confirm the presence or absence of cracks in the cross section. When peeling of the nugget (a phenomenon in which the nugget separates into two at the joining interface) was observed, it was evaluated as ×; when cracks were visually observed in the surface, it was evaluated as V; when the cross section in the thickness direction including the center of the nugget was observed and cracks not reaching the surface were observed in the cross section, it was evaluated as Δ; and when no cracks were confirmed in the cross section, it was evaluated as O. The results are listed in Table 1. The weld joint was judged to have excellent delayed fracture resistance when no cracks were observed in the cross section (O) and when cracks not reaching the surface were observed in the cross section (Δ).

The amount of residual hydrogen in the nugget was measured by thermal desorption analysis. Regarding the amount of residual hydrogen before sound wave irradiation, a weld joint that had not been irradiated with sound waves was selected from the weld joints obtained under each set of current conditions, and a sample was obtained from the weld joint by cutting it into 1 cm × 1 cm × sheet thickness so that the resistance spot welding point was included in the center. After degreasing with ethanol, thermal desorption analysis was performed. Regarding the amount of residual hydrogen after sound wave irradiation, a weld joint that had been irradiated with sound waves was selected from the above weld joints, and a sample was obtained from the weld joint by cutting it into 1 cm × 1 cm × sheet thickness so that the resistance spot welding point was included in the center. After degreasing with ethanol, thermal desorption analysis was performed. The sample was heated at a heating rate of 200 °C/hour, and the amount of hydrogen released from the sample was quantified by gas chromatography every 5 minutes to determine the hydrogen release rate (wt/min) at each temperature. The amount of hydrogen released was obtained by calculation by accumulating the obtained hydrogen release rates. Then, the value of part per million obtained by dividing the integrated value of the amount of hydrogen released up to 210 °C by the mass of the sample was defined as the amount (wt.ppm) of residual hydrogen in the nugget in mass fraction, and it is also listed in Table 1.

**Table 1**

| No. | Steel sheet | | | | Joining (current) condition | | | Sound wave irradiation condition | | | | Evaluation | | | | Classification |
|---|---|---|---|---|---|---|---|---|---|---|---|---|---|---|---|---|
| | Upper steel sheet | | Lower steel sheet | | Current (kA) | Current time (ms) | Electrode force (kN) | Time from start of current passage to start of sound wave irradiation (min) | Frequency (Hz) | Sound pressure level (dB) | Irradiation time (sec) | Delayed fracture resistance of weld joint | Amount of residual hydrogen in nugget after sound wave irradiation (wt.ppm) | Amount of residual hydrogen in nugget before sound wave irradiation (wtppm) | Hydrogen reduction rate (%) | |
| | Tensile strength (MPa) | Coating | Tensile strength (MPa) | Coating | | | | | | | | | | | | |
| 1 | 1505 | CR | 1505 | CR | 5 | 200 | 5 | - | - | - | - | × | 0.82 | 0.82 | 0 | Comparative Example |
| 2 | 1505 | CR | 1505 | CR | 5 | 200 | 5 | 5 | 5 | 50 | 500 | × | 0.69 | 0.87 | 21 | Comparative Example |
| 3 | 1505 | CR | 1505 | CR | 5 | 200 | 5 | 5 | 15 | 50 | 500 | Δ | 0.29 | 0.85 | 65 | Example |
| 4 | 1505 | CR | 1505 | CR | 5 | 200 | 5 | 5 | 100 | 50 | 500 | ○ | 0.13 | 0.80 | 84 | Example |
| 5 | 1505 | CR | 1505 | CR | 5 | 200 | 5 | 5 | 1000 | 50 | 500 | ○ | 0.02 | 0.80 | 97 | Example |
| 6 | 1505 | CR | 1505 | CR | 5 | 200 | 5 | 5 | 5000 | 50 | 500 | ○ | 0.01 | 0.82 | 99 | Example |
| 7 | 1505 | CR | 1505 | CR | 5 | 200 | 5 | 5 | 10000 | 50 | 500 | ○ | 0.02 | 0.93 | 98 | Example |
| 8 | 1505 | CR | 1505 | CR | 5 | 200 | 5 | 5 | 50000 | 50 | 500 | ○ | 0.06 | 0.83 | 93 | Example |
| 9 | 1505 | CR | 1505 | CR | 5 | 200 | 5 | 5 | 90000 | 50 | 500 | Δ | 0.29 | 0.85 | 65 | Example |
| 10 | 1505 | CR | 1505 | CR | 5 | 200 | 5 | 5 | 120000 | 50 | 500 | × | 0.56 | 0.80 | 30 | Comparative Example |
| 11 | 1505 | CR | 1505 | CR | 5 | 200 | 5 | 1 | 5000 | 50 | 500 | ○ | 0.01 | 0.77 | 98 | Example |
| 12 | 1505 | CR | 1505 | CR | 5 | 200 | 5 | 30 | 5000 | 50 | 500 | ○ | 0.02 | 0.77 | 97 | Example |
| 13 | 1505 | CR | 1505 | CR | 5 | 200 | 5 | 60 | 5000 | 50 | 500 | ○ | 0.03 | 0.94 | 96 | Example |
| 14 | 1505 | CR | 1505 | CR | 5 | 200 | 5 | 120 | 5000 | 50 | 500 | ○ | 0.02 | 0.84 | 98 | Example |
| 15 | 1505 | CR | 1505 | CR | 5 | 200 | 5 | 360 | 5000 | 50 | 500 | ○ | 0.01 | 0.79 | 99 | Example |
| 16 | 1505 | CR | 1505 | CR | 5 | 200 | 5 | 5 | 5000 | 10 | 500 | × | 0.74 | 0.82 | 10 | Comparative Example |
| 17 | 1505 | CR | 1505 | CR | 5 | 200 | 5 | 5 | 5000 | 25 | 500 | ∇ | 0.51 | 0.79 | 35 | Comparative Example |
| 18 | 1505 | CR | 1505 | CR | 5 | 200 | 5 | 5 | 5000 | 35 | 500 | ○ | 0.09 | 0.82 | 89 | Example |
| 19 | 1505 | CR | 1505 | CR | 5 | 200 | 5 | 5 | 5000 | 70 | 500 | ○ | 0.01 | 0.79 | 99 | Example |
| 20 | 1505 | CR | 1505 | CR | 5 | 200 | 5 | 5 | 5000 | 120 | 500 | ○ | 0.01 | 0.80 | 98 | Example |
| 21 | 1505 | CR | 1505 | CR | 5 | 200 | 5 | 5 | 5000 | 50 | 2 | Δ | 0.34 | 0.84 | 60 | Example |
| 22 | 1505 | CR | 1505 | CR | 5 | 200 | 5 | 5 | 5000 | 50 | 10 | ○ | 0.17 | 0.79 | 79 | Example |
| 23 | 1505 | CR | 1505 | CR | 5 | 200 | 5 | 5 | 5000 | 50 | 100 | ○ | 0.11 | 0.81 | 86 | Example |
| 24 | 1505 | CR | 1505 | CR | 5 | 200 | 5 | 5 | 5000 | 50 | 500 | ○ | 0.02 | 0.84 | 97 | Example |
| 25 | 1505 | CR | 1505 | CR | 5 | 200 | 5 | 5 | 5000 | 50 | 1200 | ○ | 0.01 | 0.79 | 98 | Example |
| 26 | 1505 | CR | 1505 | CR | 5 | 200 | 5 | 5 | 5000 | 50 | 3600 | ○ | 0.02 | 0.77 | 97 | Example |
| 27 | 1521 | GA | 1505 | CR | 5 | 200 | 5 | 5 | 5000 | 50 | 500 | ○ | 0.03 | 0.80 | 96 | Example |
| 28 | 1505 | CR | 1521 | GA | 5 | 200 | 5 | 5 | 5000 | 50 | 500 | ○ | 0.01 | 0.81 | 99 | Example |
| 29 | 1521 | GA | 1521 | GA | 5 | 200 | 5 | 5 | 5000 | 50 | 500 | ○ | 0.02 | 0.81 | 97 | Example |
| 30 | 1531 | GI | 1505 | CR | 5 | 200 | 5 | 5 | 5000 | 50 | 500 | ○ | 0.02 | 0.84 | 98 | Example |
| 31 | 1505 | CR | 1531 | GI | 5 | 200 | 5 | 5 | 5000 | 50 | 500 | ○ | 0.01 | 0.82 | 98 | Example |
| 32 | 1531 | GI | 1531 | GI | 5 | 200 | 5 | 5 | 5000 | 50 | 500 | ○ | 0.03 | 0.78 | 96 | Example |
| 33 | 812 | CR | 812 | CR | 5 | 200 | 5 | 5 | 5000 | 50 | 500 | ○ | 0.00 | 0.55 | 99 | Example |
| 34 | 1212 | CR | 1212 | CR | 5 | 200 | 5 | 5 | 5000 | 50 | 500 | ○ | 0.01 | 0.64 | 99 | Example |
| 35 | 1300 | CR | 1300 | CR | 5 | 200 | 5 | 5 | 5000 | 50 | 0.3 | Δ | 0.33 | 0.72 | 55 | Example |

| | | | | | | | | | | | | | | | | |
|---|---|---|---|---|---|---|---|---|---|---|---|---|---|---|---|---|
| Underlining indicates outside the scope of the present disclosure. CR: without coating GI: hot-dip galvanizing GA: galvannealing | | | | | | | | | | | | | | | | |

According to Table 1, it is understood that the amount of residual hydrogen in the nugget was sufficiently reduced in all of the weld joints that had been irradiated with sound waves under the predetermined conditions, and as a result, delayed fracture was not confirmed, and good delayed fracture resistance was obtained. Good delayed fracture resistance was achieved even in high strength steel sheets that were likely to have delayed fracture with conventional techniques. On the other hand, in weld joints Nos. 1, 2, 10, 16, and 17, where no sound wave irradiation was performed or the sound wave irradiation conditions were outside the predetermined ranges, the amount of residual hydrogen in the nugget was large, delayed fracture occurred, and delayed fracture caused by residual hydrogen in the nugget cannot be suppressed.

### INDUSTRIAL APPLICABILITY

According to the resistance spot welding method of the present disclosure, it is possible to satisfactorily avoid the problem of delayed fracture after joining steel sheets. According to the method of manufacturing a weld joint of the present disclosure, it is possible to easily obtain a weld joint that exhibits excellent delayed fracture resistance. Therefore, the present disclosure can be suitably used in the manufacturing process of automotive parts for automobiles and the like and in the assembly process of automotive bodies.

### REFERENCE SIGNS LIST

- 1: steel sheet (lower steel sheet)
- 11: surface
- 12: overlapping surface of steel sheet
- 13: nugget-equivalent surface
- 2: steel sheet (upper steel sheet)
- 21: surface
- 22: overlapping surface of steel sheet
- 23: nugget-equivalent surface
- 3: nugget
- 4: welding electrode (lower electrode)
- 5: welding electrode (upper electrode)
- 6: resistance spot welding point
- 7: sound wave irradiator

## Claims

1. A resistance spot welding method comprising:
sandwiching two or more overlapped steel sheets between a pair of welding electrodes,
applying current to the steel sheets while pressing the steel sheets,
forming a nugget on overlapping surfaces of the steel sheets to join the steel sheets, and
after the joining, directly or indirectly irradiating the nugget with sound waves having a frequency of 10 Hz or more and 100000 Hz or less so that a sound pressure level on a surface of the steel sheet is 30 dB or more.

2. The resistance spot welding method according to claim 1, wherein time for irradiation of the sound waves is 1 second or longer.

3. The resistance spot welding method according to claim 1 or 2, wherein at least one of the steel sheets has a tensile strength of 780 MPa or more.

4. The resistance spot welding method according to any one of claims 1 to 3, wherein at least one of the steel sheets has a coating on at least one of the surface and the overlapping surface.

5. The resistance spot welding method according to claim 4, wherein the coating is a hot-dip galvanized coating or a galvannealed coating.

6. A method of manufacturing a weld joint, the method comprising:
sandwiching two or more overlapped steel sheets between a pair of welding electrodes,
applying current to the steel sheets while pressing the steel sheets,
forming a nugget on overlapping surfaces of the steel sheets to obtain a weld joint in which the steel sheets are joined, and
after the joining, directly or indirectly irradiating the nugget with sound waves having a frequency of 10 Hz or more and 100000 Hz or less so that a sound pressure level on a surface of the steel sheet is 30 dB or more.

7. The method of manufacturing a weld joint according to claim 6, wherein time for irradiation of the sound waves is 1 second or longer.

8. The method of manufacturing a weld joint according to claim 6 or 7, wherein at least one of the steel sheets has a tensile strength of 780 MPa or more.

9. The method of manufacturing a weld joint according to any one of claims 6 to 8, wherein at least one of the steel sheets has a coating on at least one of the surface and the overlapping surface.

10. The method of manufacturing a weld joint according to claim 9, wherein the coating is a hot-dip galvanized coating or a galvannealed coating.
